# EUROPÄISCHE PATENTANMELDUNG

(11) **EP 4 663 464 A1**
(43) Veröffentlichungstag der Anmeldung: **17.12.2025**
(21) Anmeldenummer: 25182237.5
(22) Anmeldetag: 12.06.2025
(51) Int. Cl.: B60L 53/14, B60L 53/22, H02J 7/02, H02M 3/158

(54) **ELEKTRISCHES TRAKTIONSNETZ UND VERFAHREN**

(30) Priorität: 14.06.2024 DE 102024205527
(71) Anmelder: VOLKSWAGEN AG, 38440 Wolfsburg (DE)
(72) Erfinder: Schiedermeier, Maximilian, 85139 Wettstetten (DE); Hartwig, Raphael, 92342 Freystadt (DE); Kusch, Rüdiger, 38116 Braunschweig (DE)
(74) Vertreter: Zucker, Volker

(57) **Zusammenfassung**

Die Erfindung betrifft ein elektrisches Traktionsnetz (1) für ein Kraftfahrzeug, umfassend eine fremderregte Synchronmaschine (2), einen Pulswechselrichter (3), eine Hochvoltbatterie (4), einen DC/DC-Wandler (6) und ein Ladegerät (5), wobei das Ladegerät (5) einen Netzanschluss (9) für ein externes Wechselspannungsnetz aufweist, wobei das Ladegerät (5) über erste Schaltelemente (S1) mit Wechselspannungsausgängen des Pulswechselrichters (3) verbunden ist, wobei die Wechselspannungsausgänge des Pulswechselrichters (3) über zweite Schaltelemente (S2) mit den Phasen der Synchronmaschine (2) verbunden sind, wobei die Gleichspannungsanschlüsse (HV+_PWR, HV-_PWR) des Pulswechselrichters (3) und ein Ausgang des DC/DC-Wandlers (6) über dritte Schaltelemente (S3) mit der Hochvoltbatterie (4) verbunden sind, wobei die Eingänge des DC/DC-Wandlers (6) mit den Gleichspannungsanschlüssen (HV+_PWR, HV-_PWR) des Pulswechselrichters (3) verbunden sind, wobei zwischen dem Ausgang des DC/DC-Wandlers (6) und zwei Halbbrücken des DC/DC-Wandlers (6) vierte Schaltelemente (S4) angeordnet sind, wobei der DC/DC-Wandler (6) über fünfte Schaltelemente (S5) mit einer Rotorwicklung der Synchronmaschine (2) verbunden ist, sowie ein Verfahren zum Betreiben eines solchen elektrischen Traktionsnetzes.

## Beschreibung

Die Erfindung betrifft ein elektrisches Traktionsnetz für ein Kraftfahrzeug und ein Verfahren zum Betreiben eines solchen elektrischen Traktionsnetzes.

Der typische Aufbau eines elektrischen Traktionsnetzes ist eine Elektromaschine, ein Wechselrichter und eine Hochvoltbatterie. Die Elektromaschine kann grundsätzlich eine Asynchron- oder Synchronmaschine sein, wobei letztere permanent oder fremderregt sein kann. Der Wechselrichter ist meist ein Pulswechselrichter. Weiter ist es bekannt, ein Ladegerät vorzusehen, mittels dessen die Hochvoltbatterie aus einem externen Wechselspannungsnetz geladen werden kann. Dabei kommen immer mehr elektrische Bauteile zum Einsatz, sodass versucht wird, mindestens einige Bauteile sowohl für den Fahrbetrieb als auch für den Ladebetrieb zu nutzen.

Aus der WO 2023/006726 A1 ist ein elektrisches Antriebssystem für ein Fahrzeug mit einer elektrischen Drehstrommaschine, einem elektrischen Energiespeicher und einem Wechselrichter bekannt. Der Wechselrichter ist vorzugsweise ein 3-Level-T-Type Pulswechselrichter. Dabei ist als Zwischenkreiskondensator eine Reihenschaltung aus zwei Kondensatoren vorgesehen, wobei der Verbindungspunkt zwischen den Kondensatoren mit einem Mittelabgriff des Wechselrichters verbunden ist. In einem ersten Schaltzustand, in welchem ein positives Potential eines Ladeanschlusses mit dem positiven Potential des elektrischen Energiespeichers und ein negatives Potential des Ladeanschlusses mit dem negativen Potential des elektrischen Energiespeichers verbunden sind, kann der Energiespeicher über den Ladeanschluss geladen werden. In einem zweiten Schaltzustand, in welchem das positives Potential des Ladeanschlusses mit dem positiven Potential des elektrischen Energiespeichers und das negative Potential des Ladeanschlusses mit dem Mittelabgriff des Wechselrichters verbunden sind, kann der Energiespeicher über den Wechselrichter aufgeladen werden. In einem dritten Schaltzustand liegt das positive Potential des Ladeanschlusses am Mittelabgriff an und das negative Potential des Ladeanschlusses ist mit dem negativen Potential des Energiespeichers verbunden. Der Wechselrichter ist derart ausgebildet, den ersten Kondensator und/oder den zweiten Kondensator aufzuladen und als eine Ausgangsspannung des Wechselrichters eine Summe einer ersten Spannung des ersten Kondensators und einer Spannung des zweiten Kondensators zum Laden des elektrischen Energiespeichers bereitzustellen. Der Wechselrichter wird also sowohl für den Fahrbetrieb als auch den Ladebetrieb verwendet.

Der Erfindung liegt das technische Problem zugrunde, ein elektrisches Traktionsnetz mit einer fremderregten Synchronmaschine zu schaffen, bei dem die Bauteile effektiv für Fahrbetrieb und Ladebetrieb genutzt werden. Ein weiteres technisches Problem ist, ein Verfahren zum Betreiben eines solches Traktionsnetzes zur Verfügung zu stellen.

Die Lösung des technischen Problems ergibt sich durch ein elektrisches Traktionsnetz mit den Merkmalen des Anspruchs 1 und ein Verfahren mit den Merkmalen des Anspruchs 9 oder 10. Weitere vorteilhafte Ausgestaltungen der Erfindung ergeben sich aus den Unteransprüchen.

Das elektrische Traktionsnetz für ein Kraftfahrzeug umfasst eine fremderregte Synchronmaschine, einen Pulswechselrichter, eine Hochvoltbatterie, einen DC/DC-Wandler und ein Ladegerät. Das Ladegerät weist einen Netzanschluss für ein externes Wechselspannungsnetz auf. Das Ladegerät ist über erste Schaltelemente mit den Wechselspannungsausgängen des Pulswechselrichters verbunden. Die Wechselspannungsausgänge des Pulswechselrichters sind über zweite Schaltelemente mit den Phasen der Synchronmaschine verbunden. Die Gleichspannungsanschlüsse des Pulswechselrichters und ein Ausgang des DC/DC-Wandlers sind über dritte Schaltelemente mit der Hochvoltbatterie verbunden. Die Eingänge des DC/DC-Wandlers sind mit den Gleichspannungsanschlüssen des Pulswechselrichters verbunden. Zwischen dem Ausgang des DC/DC-Wandlers und zwei Halbbrücken des DC/DC-Wandlers sind vierte Schaltelemente angeordnet, wobei der DC/DC-Wandler über fünfte Schaltelemente mit einer Rotorwicklung der Synchronmaschine verbunden ist. Hierdurch können im Fahrbetrieb Teile des DC/DC-Wandlers den Rotorstrom erzeugen, wobei im Ladebetrieb der DC/DC-Wandler die vom Pulswechselrichter erzeugte Gleichspannung auf das Spannungsniveau der Hochvoltbatterie anpasst. Allgemein können die Schaltelemente Relais oder Transistoren sein. Dabei können diese als Si-, SiC- und/oder GaN-Basis bestehen.

In einer Ausführungsform ist ein Wechselspannungsausgang des Pulswechselrichters direkt mit einer Phase der Synchronmaschine verbunden, sodass ein zweites Schaltelement eingespart werden kann.

In einer weiteren Ausführungsform ist der Pulswechselrichter als 3 Level T-Type Pulswechselrichter ausgebildet. Unter anderem hat dies den Vorteil, dass die Netzfilter im Ladegerät kleiner dimensioniert werden können. Des Weiteren sind auch die Ableitströme über Y-Kondensatoren am Gleichspannungsanschluss des Pulswechselrichters gegen Masse geringer, da die Spannungshübe geringer sind, sodass auch die Amplituden der Wechselspannungsstörungen geringer sind.

In einer weiteren Ausführungsform ist zwischen den fünften Schaltelementen und der Rotorwicklung ein EMV-Filter angeordnet. Hierdurch können Störkomponenten in dem Rotorstrom aufgrund der Schaltvorgänge der beiden Halbbrücken reduziert werden.

In einer weiteren Ausführungsform weist der DC/DC-Wandler zwei Induktivitäten auf, wobei die vierten Schaltelemente zwischen den Mittelabgriffen der Halbbrücken und den Induktivitäten angeordnet sind, d.h. bei der Erzeugung des Rotorstroms sind die Induktivitäten nicht wirksam.

Alternativ sind die Induktivitäten mit den Halbbrücken verbunden, wobei die vierten Schaltelemente zwischen den Induktivitäten und einem Ausgangskondensator angeordnet sind. Dabei können die Induktivitäten hochfrequente Störungen dämpfen.

In einer weiteren Ausführungsform ist der DC/DC-Wandler als Tiefsetzsteller ausgebildet.

Alternativ ist der DC/DC-Wandler als Hochsetz-Tiefsetzsteller ausgebildet, was mehr Schaltungsaufwand erzeugt, dafür aber eine größere Flexibilität erzeugt.

Das Verfahren zum Betreiben eines zuvor beschriebenen Traktionsnetzes umfasst die Schritte, dass im Fahrbetrieb die ersten Schaltelemente geöffnet werden, die zweiten Schaltelemente geschlossen werden, die dritten Schaltelemente, die den Pulswechselrichter mit der Hochvoltbatterie verbinden, geschlossen werden und das dritte Schaltelement, das den Ausgang des DC/DC-Wandlers mit der Hochvoltbatterie verbindet, geöffnet wird, die vierten Schaltelemente geöffnet und die fünften Schaltelemente geschlossen werden.

Im Ladebetrieb werden die ersten Schaltelemente geschlossen, die zweiten Schaltelemente geschlossen, die dritten Schaltelemente, die den negativen Gleichspannungsanschluss des Pulswechselrichters und den Ausgang des DC/DC-Wandlers mit der Hochvoltbatterie verbinden, geschlossen und das dritte Schaltelement, das den positiven Gleichspannungsanschluss des Pulswechselrichters mit der Hochvoltbatterie verbindet, geöffnet, die vierten Schaltelemente geschlossen und die fünften Schaltelemente geöffnet.

Die Erfindung wird nachfolgend anhand bevorzugter Ausführungsbeispiele näher erläutert. Die Figuren zeigen:
- Fig. 1: ein schematisches Blockschaltbild eines elektrischen Traktionsnetzes in einer ersten Ausführungsform und
- Fig. 2: eine alternative Ausführungsform einer Vorrichtung der vierten und fünften Schaltelemente.

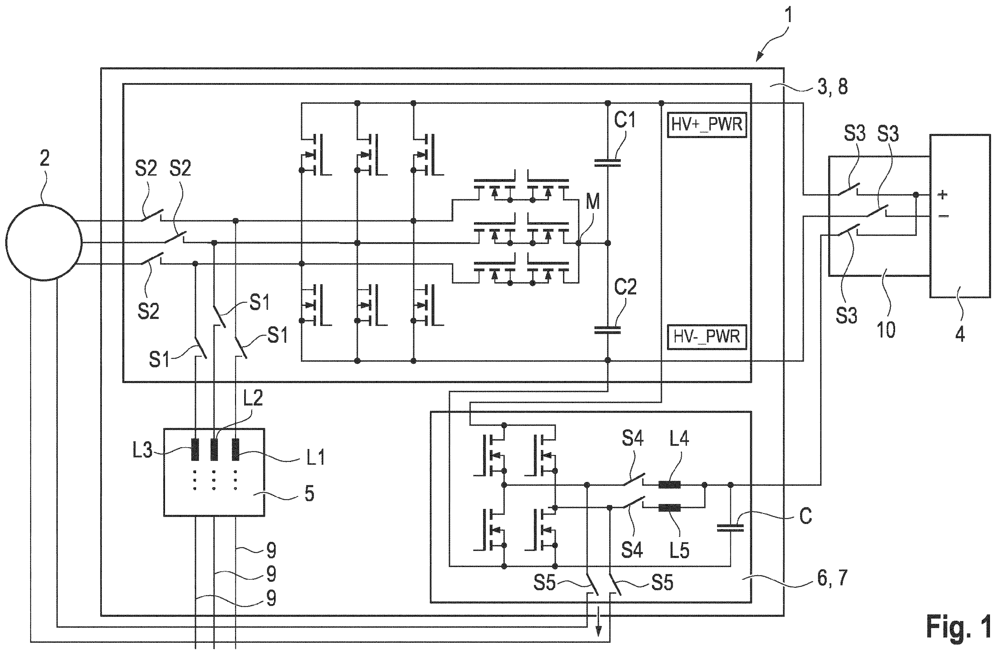

In der Fig. 1 ist schematisch ein Blockschaltbild eines elektrischen Traktionsnetzes 1 dargestellt. Das elektrische Traktionsnetz 1 umfasst eine fremderregte Synchronmaschine 2, einen Pulswechselrichter 3, eine Hochvoltbatterie 4, ein Ladegerät 5 und einen DC/DC-Wandler 6, der als Tiefsetzsteller 7 ausgebildet ist. Der Pulswechselrichter 3 ist als 3-Level T-Type-Pulswechselrichter 8 ausgebildet. Das Ladegerät weist einen Netzanschluss 9 für ein externes Wechselspannungsnetz auf, wobei schematisch nur die drei Phaseneingänge dargestellt sind. Das Ladegerät 5 weist Wechselspannungsnetzfilter und einen Leistungsfaktorkorrekturfilter auf, dessen drei Induktivitäten L1-L3 schematisch dargestellt sind. Der Wechselspannungsnetzfilter kann dabei X- und Y-Kondensatoren aufweisen. Das Ladegerät ist über erste Schaltelemente S1 mit den Wechselspannungsausgängen des Pulswechselrichters 3 verbunden. Über zweite Schaltelemente S2 sind die Wechselspannungsausgänge des Pulswechselrichters 3 mit der Synchronmaschine 2 verbunden, wobei ein zweites Schaltelement S2 entfallen könnte. Auf der Gleichspannungsseite des Pulswechselrichters 3 ist eine Reihenschaltung aus zwei Kondensatoren C1, C2 als Zwischenkreiskondensator angeordnet, deren Mittelabgriff mit dem Mittelabgriff M des 3-Level T-Type-Pulswechselrichters 8 verbunden ist. Weiter sind dritte Schaltelemente S3 vorgesehen, wobei über die dritten Schaltelemente S3 der positive Gleichspannungsanschluss HV+_PWR mit dem Pluspol der Hochvoltbatterie 4, der negative Gleichspannungsanschluss HV-_PWR mit dem Minuspol der Hochvoltbatterie 4 und der Ausgang des DC/DC-Wandlers 6 mit dem Pluspol der Hochvoltbatterie 4 verbunden ist. Die dritten Schaltelemente S3 sind beispielsweise in einer Batterie-Junction-Box 10 angeordnet. Der DC/DC-Wandler 6 weist zwei Halbbrücken, zwei Induktivitäten L4, L5 und einen Ausgangskondensator C auf. Die beiden Induktivitäten L4, L5 sind an der dem Kondensator C zugewandten Seite verbunden. Auf der anderen Seite sind die Induktivitäten L4, L5 über vierte Schaltelemente S4 mit jeweils einem Mittelabgriff einer Halbbrücke verbunden. Schließlich sind

die Mittelabgriffe der Halbbrücken über fünfte Schaltelemente S5 mit der Rotorwicklung der Synchronmaschine 2 verbunden, wobei der Pfeil den Rotorstrom symbolisiert.

Im Fahrbetrieb werden die ersten Schaltelemente S1 und die vierten Schaltelemente S4 geöffnet. Die zweiten Schaltelemente S2 und die fünften Schaltelemente S5 werden geschlossen. Das dritte Schaltelement S3, das den Ausgang des DC/DC-Wandlers 6 mit dem Pluspol der Hochvoltbatterie 4 verbindet, wird geöffnet und die beiden anderen dritten Schaltelemente S3 geschlossen. Der Pulswechselrichter 3 erzeugt dann den Statorstrom für die Synchronmaschine 2 und die beiden Halbbrücken des DC/DC-Wandlers 6 erzeugen den Rotorstrom.

Im Ladebetrieb werden die ersten Schaltelemente S1 und die vierten Schaltelemente S4 geschlossen und die zweiten Schaltelemente S2 und die fünften Schaltelemente S5 geöffnet. Das dritte Schaltelement S3, das den positiven Gleichspannungsanschluss HV+_PWR des Pulswechselrichters 3 mit dem Pluspol der Hochvoltbatterie 4 verbindet, wird geöffnet und die beiden anderen dritten Schaltelemente S3 geschlossen. Der Pulswechselrichter 3 richtet dann die Netzwechselspannung gleich und führt diese Gleichspannung dem DC/DC-Wandler 6 zu, der diese dann tiefsetzt und als Ladespannung der Hochvoltbatterie 4 zuführt.

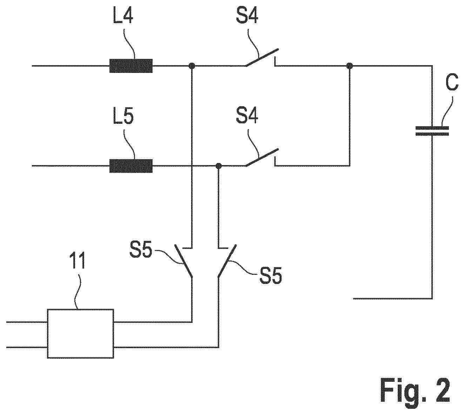

In der Fig. 2 ist eine alternative Anordnung der vierten Schaltelemente S4 und fünften Schaltelemente S5 dargestellt. Anschaulich sind die vierten Schaltelemente S4 hinter die Induktivitäten L4, L5 verschoben worden, sodass diese im Stromkreis für den Rotorstrom enthalten sind. Weiter ist ein EMV-Filter 11 im Stromkreis angeordnet. Dieser EMV-Filter 11 kann auch bei der Ausführungsform gemäß Fig. 1 zur Anwendung kommen. Durch die Induktivitäten L4, L5 können dann Induktivitäten im EMV-Filter reduziert werden.

### Bezugszeichenliste

- 1: Traktionsnetz
- 2: Synchronmaschine
- 3: Pulswechselrichter
- 4: Hochvoltbatterie
- 5: Ladegerät
- 6: DC/DC-Wandler
- 7: Tiefsetzsteller
- 8: 3-Level T-Type-Pulswechselrichter
- 9: Netzanschluss
- 10: Batterie-Junction-Box
- 11: EMV-Filter
- S1-S5: Schaltelement
- C1, C2: Kondensator
- C: Kondensator
- L1-L5: Induktivitäten
- M: Mittelabgriff

## Patentansprüche

1. Elektrisches Traktionsnetz (1) für ein Kraftfahrzeug, umfassend eine fremderregte Synchronmaschine (2), einen Pulswechselrichter (3), eine Hochvoltbatterie (4), einen DC/DC-Wandler (6) und ein Ladegerät (5), wobei das Ladegerät (5) einen Netzanschluss (9) für ein externes Wechselspannungsnetz aufweist, wobei das Ladegerät (5) über erste Schaltelemente (S1) mit Wechselspannungsausgängen des Pulswechselrichters (3) verbunden ist, wobei die Wechselspannungsausgänge des Pulswechselrichters (3) über zweite Schaltelemente (S2) mit den Phasen der Synchronmaschine (2) verbunden sind, wobei die Gleichspannungsanschlüsse (HV+_PWR, HV-_PWR) des Pulswechselrichters (3) und ein Ausgang des DC/DC-Wandlers (6) über dritte Schaltelemente (S3) mit der Hochvoltbatterie (4) verbunden sind, wobei die Eingänge des DC/DC-Wandlers (6) mit den Gleichspannungsanschlüssen (HV+_PWR, HV-_PWR) des Pulswechselrichters (3) verbunden sind, wobei zwischen dem Ausgang des DC/DC-Wandlers (6) und zwei Halbbrücken des DC/DC-Wandlers (6) vierte Schaltelemente (S4) angeordnet sind, wobei der DC/DC-Wandler (6) über fünfte Schaltelemente (S5) mit einer Rotorwicklung der Synchronmaschine (2) verbunden ist.

2. Elektrisches Traktionsnetz nach Anspruch 1, **dadurch gekennzeichnet, dass** ein Wechselspannungsausgang des Pulswechselrichters (3) direkt mit einer Phase der Synchronmaschine (2) verbunden ist.

3. Elektrisches Traktionsnetz nach Anspruch 1 oder 2, **dadurch gekennzeichnet, dass** der Pulswechselrichter (3) als 3-Level T-Type-Pulswechselrichter (8) ausgebildet ist.

4. Elektrisches Traktionsnetz mit einem der vorangegangenen Ansprüche, **dadurch gekennzeichnet, dass** zwischen den fünften Schaltelementen (S5) und der Rotorwicklung ein EMV-Filter (11) angeordnet ist.

5. Elektrisches Traktionsnetz nach einem der vorangegangenen Ansprüche, **dadurch gekennzeichnet, dass** der DC/DC-Wandler (6) wie Induktivitäten (L4, L5) aufweist, wobei die vierten Schaltelemente (S4) zwischen den Mittelabgriffen der Halbbrücken und den Induktivitäten (L4, L5) angeordnet sind.

6. Elektrisches Traktionsnetz nach einem der Ansprüche 1 bis 4, **dadurch gekennzeichnet, dass** die Induktivitäten (L4, L5) mit den Halbbrücken verbunden sind, wobei die vierten Schaltelemente (S4) zwischen den Induktivitäten (L4, L5) und einem Ausgangskondensator (C) angeordnet sind.

7. Elektrisches Traktionsnetz nach einem der vorangegangenen Ansprüche, **dadurch gekennzeichnet, dass** der DC/DC-Wandler (6) als Tiefsetzsteller (7) ausgebildet ist.

8. Elektrisches Traktionsnetz nach einem der Ansprüche 1 bis 6, **dadurch gekennzeichnet, dass** der DC/DC-Wandler (6) als Hochsetz-Tiefsetzsteller ausgebildet ist.

9. Verfahren zum Betreiben eines elektrischen Traktionsnetzes (1) mit den Merkmalen des Anspruchs 1, **dadurch gekennzeichnet, dass** im Fahrbetrieb die ersten Schaltelemente (S1) geöffnet werden, die zweiten Schaltelemente (S2) geschlossen werden, die dritten Schaltelemente (S3), die den Pulswechselrichter (3) mit der Hochvoltbatterie (4) verbinden, geschlossen werden und das dritte Schaltelement (S3), das den Ausgang des DC/DC-Wandlers (6) mit der Hochvoltbatterie (4) verbindet, geöffnet wird, die vierten Schaltelemente (S4) geöffnet und die fünften Schaltelemente (S5) geschlossen werden.

10. Verfahren zum Betreiben eines elektrischen Traktionsnetzes (1) mit den Merkmalen des Anspruchs 1, **dadurch gekennzeichnet, dass** im Ladebetrieb die ersten Schaltelemente (S1) geschlossen werden, die zweiten Schaltelemente (S2) geöffnet werden, die dritten Schaltelemente (S3), die den negativen Gleichspannungsanschluss (HV-_PWR) des Pulswechselrichtgers (3) und den Ausgang des DC/DC-Wandlers (6) mit der Hochvoltbatterie (4) verbinden, geschlossen werden und das dritte Schaltelement (S3), das den positiven Gleichspannungsanschluss (HV+_PWR) des Pulswechselrichters (3) mit der Hochvoltbatterie (4) verbindet, geöffnet wird, die vierten Schaltelemente (S4) geschlossen und die fünften Schaltelemente (S5) geöffnet werden.
